# EUROPÄISCHE PATENTSCHRIFT

(11) **EP 3 789 256 B1**
(45) Veröffentlichungstag und Bekanntmachung des Hinweises auf die Patenterteilung: **01.03.2023**
(21) Anmeldenummer: 20184217.6
(22) Anmeldetag: 06.07.2020
(51) Int. Cl.: B60T 8/17, B62J 99/00, B60T 8/32, B62L 5/18, B62L 3/02

(54) **DRUCKMODULATOR EINES ANTIBLOCKIER-SYSTEMS EINES ZWEIRADS**
PRESSURE MODULATOR OF AN ANTI-BLOCKING SYSTEM OF A BICYCLE
MODULATEUR DE PRESSION D'UN SYSTÈME D'ANTIBLOCAGE D'UN DEUX ROUES

(30) Priorität: 03.09.2019 DE 102019213326
(43) Veröffentlichungstag der Anmeldung: 10.03.2021
(73) Patentinhaber: Robert Bosch GmbH, 70442 Stuttgart (DE)
(72) Erfinder: Widmaier, Georg, 71229 Leonberg (DE); Moia, Alessandro, 71088 Holzgerlingen (DE)

(56) Entgegenhaltungen:
- EP-A1- 1 982 884
- EP-A1- 2 119 609
- EP-A1- 3 275 742
- WO-A1-2014/108235
- DE-A1-102012 222 058

## Beschreibung

### Stand der Technik

Die vorliegende Erfindung betrifft einen Druckmodulator für ein Antiblockier-System eines Zweirads, insbesondere eines Fahrrads oder eines elektrisch betreibbaren Fahrrads.

In jüngster Zeit werden nicht nur bei elektrisch betreibbaren Fahrrädern, sondern auch bei normalen Fahrrädern stärkere Bremsen mit Bremsscheiben verwendet. Hierbei besteht die Gefahr, dass ein Nutzer eines derartigen Fahrrads oder elektrisch betreibbaren Fahrrads eine zu starke Bremsung durchführt, bei der insbesondere ein Vorderrad blockieren kann und dies zu einem Überschlag oder Sturz oder dergleichen führen kann. Abhilfe für derartige gefährliche Fahrsituationen können durch Antiblockier-Systeme erreicht werden. Da bei Fahrrädern und elektrisch betreibbaren Fahrrädern ein Kaufgrund u. a. ein Gewicht des Fahrrads ist, müssen derartige Antiblockier-Systeme möglichst ein geringes Gewicht aufweisen. Auch ist eine reduzierte Bauteileanzahl von Vorteil, um ein optisch ansprechendes Fahrrad bereitzustellen. Aus der EP 33 666 536 A1 ist beispielsweise ein Druckmodulator für ein Antiblockier-System bekannt, welcher einen integrierten Bremskraftverstärker aufweist. Hierdurch kann zwar eine notwendige Bremskraft durch den Fahrer reduziert werden, allerdings ergibt sich ein sehr komplizierter Aufbau des Druckmodulators. Ferner ist hier der Aufbau derart gewählt, dass eine Feder vorgesehen ist, gegen die ein Aktor arbeiten muss, um Bremsflüssigkeit aus dem Bremssattel zu fördern. Dabei ist die Anordnung derart, dass ein Fahrer einen Bremsdruck im Bremssattel nicht über die Vorspannung der Feder erhöhen kann. Falls eine Fehlfunktion der Feder vorliegt, führt dies dazu, dass die normale Bremse nicht mehr funktioniert und ein Fahrer das Fahrrad nicht mehr bremsen kann.

Als Stand der Technik können die folgenden Dokumente zitiert werden : EP 1 982 884 A1, EP 3 275 742 A1, EP 2 119 609 A1, WO 2014/108235 A1, DE 10 2012 222058 A1, die jeweils Druckmodulatoren von Antiblockier-Systemen für Zweiradfahrzeuge offenlegen.

### Offenbarung der Erfindung

Der erfindungsgemäße Druckmodulator eines Antiblockier-Systems eines Zweirads, insbesondere eines Fahrrads mit oder ohne elektrischem Antrieb mit den Merkmalen des Anspruchs 1 weist demgegenüber den Vorteil auf, dass ein sehr kostengünstiger und platzsparender Druckmodulator ermöglicht wird, welcher für Fahrräder bestens geeignet ist. Dabei weist der erfindungsgemäße Druckmodulator auch ein sehr geringes Gewicht auf. Weiterhin kann der erfindungsgemäße Druckmodulator so ausgelegt werden, dass eine notwendige Leistungsaufnahme zur Druckmodulation möglichst gering ist. Dabei stellt der erfindungsgemäße Druckmodulator sicher, dass in allen Betriebssituationen das Zweirad auch sicher gebremst werden kann.

Dies wird erfindungsgemäß dadurch erreicht, dass der Druckmodulator eine Hauptleitung mit einem ersten Anschluss für einen Bremshebel oder eine Bremsbetätigungseinrichtung und einen zweiten Anschluss für eine Rad-Bremse, insbesondere eine Vorderradbremse eines Fahrrads, aufweist. Ferner umfasst der Druckmodulator eine Nebenleitung, welche von der Hauptleitung abzweigt, sowie eine Ventilanordnung mit einem ersten Ventil und einem zweiten Ventil. Das erste Ventil ist in der Hauptleitung angeordnet und das zweite Ventil ist in der Nebenleitung angeordnet. Weiterhin umfasst der Druckmodulator eine Speicherkammer mit einem in der Speicherkammer angeordneten Kolben sowie einem Rückstellelement für den Kolben. Die Nebenleitung führt dabei zur Speicherkammer und zweigt von der Hauptleitung in einen Bereich zwischen dem ersten Ventil und dem zweiten Anschluss ab. Somit kann ein einfach aufgebauter Druckmodulator in kompakter Bauweise bereitgestellt werden.

Die Unteransprüche zeigen bevorzugte Weiterbildungen der Erfindung.

Vorzugsweise umfasst der Druckmodulator ferner einen Aktuator zur Bewegung des Kolbens. Der Aktuator ist dabei besonders bevorzugt ein Magnetaktuator. Der Aktuator betätigt dabei den Kolben aus einer durch Aufnahme eines Speicherdrucks in der Speicherkammer zurückgesetzten Position gegen den Speicherdruck, um das sich in der Speicherkammer befindliche Hydraulikfluid wieder aus der Speicherkammer herauszudrücken.

Eine besonders einfache und kostengünstige Regelung des Antiblockier-Systems ist möglich, wenn vorzugsweise das zweite Ventil ein kontinuierlich regelbares Ventil ist und das erste Ventil ein Schaltventil in Form eines 2/2-Wegeventils ist. Das Schaltventil kann dabei nur zwischen zwei Positionen, einer Durchgangsposition und einer Sperrposition hin und her geschaltet werden. Die eigentliche Druckmodulation erfolgt dabei über das kontinuierlich regelbare zweite Ventil. Dabei ist es insbesondere auch bevorzugt möglich, dass kein Aktuator am Kolben vorgesehen ist, sondern die Regelung ausschließlich über das kontinuierlich regelbare zweite Ventil erfolgt.

Weiter bevorzugt umfasst der Druckmodulator eine Rückleitung, in welcher ein Rückschlagventil angeordnet ist. Die Rückleitung verbindet dabei die Nebenleitung mit der Hauptleitung. Die Rückleitung zweigt dabei von der Nebenleitung in einen Bereich zwischen dem zweiten Ventil und der Speicherkammer ab. Die Rückleitung mündet dabei in einen Bereich der Hauptleitung zwischen dem ersten Ventil und einem Abzweigepunkt der Nebenleitung von der Hauptleitung. Das Rückschlagventil öffnet dabei in Richtung zur Hauptleitung. Durch diese Ausgestaltung kann Hydraulikfluid durch Betätigung des Kolbens über das Rückschlagventil und die Rückleitung in die Hauptleitung zurückgefördert werden. Das zweite Ventil in der Nebenleitung muss dabei nicht betätigt werden und kann somit beispielsweise stromlos in einer geschlossenen Position verbleiben.

Gemäß einer weiteren bevorzugten alternativen Ausgestaltung der Erfindung umfasst der Druckmodulator ferner ein drittes Ventil, welches in der Nebenleitung angeordnet ist. Das dritte Ventil ist dabei zwischen dem zweiten Ventil und dem Abzweigepunkt der Nebenleitung von der Hauptleitung angeordnet. Hierdurch kann insbesondere eine gesamte Leistungsaufnahme des Druckmodulators zur Steuerung der Ventile und des Aktuators minimiert werden.

Weiter bevorzugt ist das zweite Ventil ein Schaltventil in Form eines 2/2-Wegeventils.

Gemäß einer weiteren bevorzugten Ausgestaltung der Erfindung ist das erste Ventil in der Hauptleitung ein Schaltventil in Form eines 2/2-Wegeventils.

Vorzugsweise ist der Kolben derart ausgebildet, dass der Kolben eine zum Anschluss der Nebenleitung gerichtete Druckseite und eine Rückseite aufweist. An der Rückseite ist bevorzugt eine stiftförmige Verlängerung angeordnet, welche von einer ringförmigen Dichtung umgeben ist. Die Druckseite des Kolbens ist vorzugsweise sich verjüngend, insbesondere konisch, ausgebildet.

Um eine schnelle Bewegbarkeit des Kolbens sicherzustellen, weist der Kolben vorzugsweise wenigstens eine Durchgangsöffnung auf, welche die Druckseite mit der Rückseite verbindet. Alternativ sind in einem Zylinder, in welchem der Kolben angeordnet ist, Verbindungsbohrungen vorgesehen.

Um einen Widerstand bei der Bewegung des Kolbens möglichst gering zu halten, wird der Kolben vorzugsweise durch eine mehrere Punkte umfassende Führung oder eine Teflonfolie oder eine besondere Kolbenform in Form eines hexagonalen Kolbens ausgebildet.

### Zeichnung

Weiter wird ein Verfahren zur Ansteuerung des Aktors und insbesondere des Kolbens entsprechend der Funktionsweise des Druckmodulators beansprucht. Hierbei kann ebenfalls die Ansteuerung des ersten und/oder zweiten Ventils beinhaltet sein.

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines elektrisch betreibbaren Fahrrads mit einem Druckmodulator,

- Figur 2: eine schematische Darstellung des Druckmodulators von Figur 1,
- Figur 3: eine schematische Darstellung einer Speicherkammer mit Kolben des Druckmodulators der Figuren 1 und 2,

- Figur 4: eine schematische Darstellung eines Druckmodulators gemäß einem anderen Ausführungsbeispiel, und
- Figur 5: eine schematische Darstellung eines Druckmodulators gemäß der Erfindung

### Bevorzugte Ausführungsformen der Erfindung

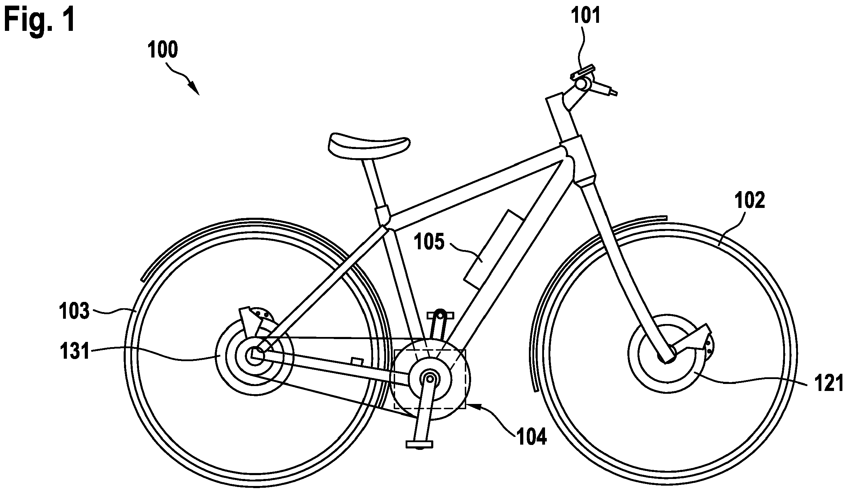

Nachfolgend wird unter Bezugnahme auf die Figuren 1 bis 3 ein Druckmodulator 1 eines Antiblockier-Systems 110 eines elektrisch betreibbaren Zweirads 100 im Detail beschrieben. Wie aus Figur 1 ersichtlich ist, umfasst das Zweirad 100 ein Vorderrad 102 mit einer Vorderradbremse 121 und ein Hinterrad 103 mit einer Hinterradbremse 131. Weiterhin ist ein elektrischer Antrieb 104 vorgesehen, welcher als sog. Mittelmotor ausgeführt ist und im Bereich der Tretlagerachse angeordnet ist. Das Bezugszeichen 105 bezeichnet schematisch einen Akku zur Versorgung des Zweirads mit elektrischer Energie.

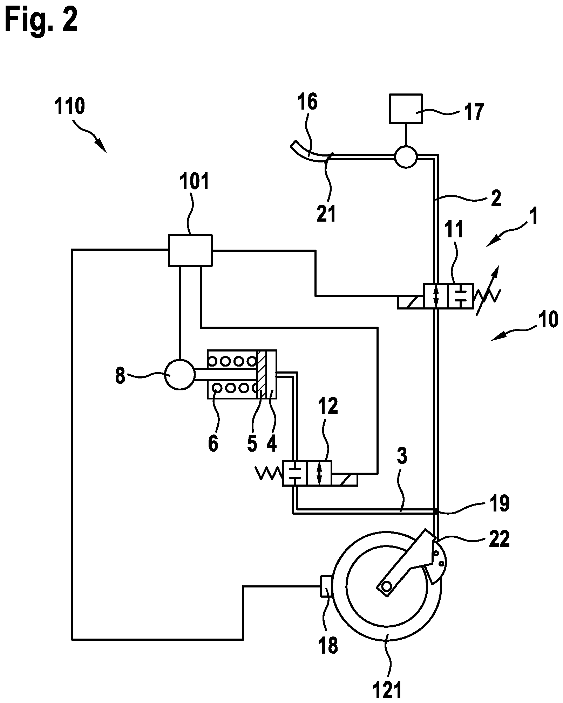

Figur 2 zeigt beispielhaft eine Ausgestaltung eines Antiblockier-Systems 110 für das Zweirad 100 an der Vorderradbremse 121. Es sei jedoch angemerkt, dass das Antiblockier-System auch zusätzlich noch oder ausschließlich an der Hinterradbremse 131 in gleicher Konfiguration vorgesehen sein kann.

Wie aus Figur 2 ersichtlich ist, umfasst das Antiblockier-System 110 eine Steuereinheit 101 sowie den Druckmodulator 1.

Der Druckmodulator 1 umfasst eine Hauptleitung 2 mit einem ersten Anschluss 21 zu einem Bremshebel 16 und einem zweiten Anschluss 22 zur Vorderradbremse 121. Ferner umfasst der Druckmodulator 1 eine Nebenleitung 3, welche von der Hauptleitung 2 abzweigt.

Wie aus Figur 2 ersichtlich ist, führt die Nebenleitung 3 zu einer Speicherkammer 4 mit einem in der Speicherkammer 4 angeordneten Kolben 5. Das Bezugszeichen 6 bezeichnet ein Rückstellelement für den Kolben. Im drucklosen Zustand ist der Kolben 6 durch das Rückstellelement 5 so in der Speicherkammer positioniert, dass ein Volumen der Speicherkammer 4 sehr klein oder auch Null ist.

Der Kolben 5 wird mittels eines Aktors 8 betätigt, welcher in diesem Ausführungsbeispiel ein Magnetaktor ist. Der Aktor 8 dient insbesondere dazu, den Kolben 5 zu bewegen, um Hydraulikfluid aus der Speicherkammer 4 in Richtung zur Radbremse an dem Vorderrad 121 herauszudrücken. Die Rückstellfeder ist dabei nur mit einer sehr kleinen Rückstellkraft ausgelegt, um den Kolben ohne Betätigung des Aktors 8 in die Ausgangsposition, bei der das Volumen der Speicherkammer 4 sehr klein oder Null ist, zu drücken, wenn ein druckloser Zustand im Bremssystem vorliegt.

Der Druckmodulator 1 umfasst ferner eine Ventilanordnung 10 mit einem ersten Ventil 11 und einem zweiten Ventil 12. Das erste Ventil 11 ist dabei in der Hauptleitung 12 angeordnet und das zweite Ventil 12 ist in der Nebenleitung 3 angeordnet. Die Nebenleitung 3 zweigt dabei von einem Abzweigpunkt 19 von einem Bereich der Hauptleitung 2 ab, der zwischen dem ersten Ventil 11 und dem zweiten Anschluss 22 liegt.

Das Bezugszeichen 17 bezeichnet ferner ein Reservoir für Hydraulikfluid, welche mit der Hauptleitung 2 verbunden ist.

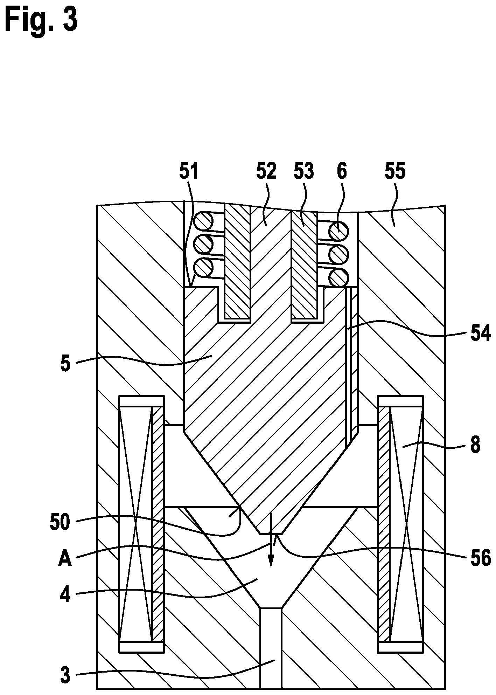

Figur 3 zeigt im Detail den Aufbau der Speicherkammer 4 und des Kolbens 5. Die Speicherkammer 4 ist in einem Zylinder 55 gebildet, welcher schematisch in Figur 3 gezeigt ist. Der Aktor 8 ist ein Magnetaktor zur Bewegung des Kolbens 5 in Richtung des Pfeils A, um Hydraulikfluid aus der Speicherkammer 4 herauszudrücken.

Der Kolben 5 weist eine Druckseite 50, welche zur Speicherkammer 4 gerichtet ist, und eine Rückseite 51 auf. An der Rückseite 51 ist eine stiftartige Verlängerung 52 sowie eine Dichtung 53 vorgesehen. Die Dichtung 53 ist um die stiftartige Verlängerung 52 herum angeordnet. Das Rückstellelement 6 ist dabei außerhalb der Dichtung 53 positioniert.

Um eine schnelle Bewegung des Kolbens 5 sicherzustellen, ist vorzugsweise wenigstens eine Durchgangsöffnung 54 im Kolben 5 ausgebildet, welche die Druckseite 50 mit der Rückseite 51 verbindet.

Die Steuereinheit 101 des Antiblockier-Systems 100 kann, wie in Figur 1 schematisch darstellt, in eine bei dem elektrisch betreibbaren Fahrrad schon vorhandene Steuereinrichtung des elektrischen Antriebs 104 integriert sein. Wie aus der schematischen Darstellung von Figur 2 ersichtlich ist, ist die Steuereinheit 101 mit dem Aktor 8 sowie dem ersten Ventil 11 und dem zweiten Ventil 12 verbunden.

Die Funktion des erfindungsgemäßen Druckmodulators ist dabei wie folgt. In einem Bremsfall, wenn ein Nutzer des Zweirads den Bremshebel 16 zieht, erhöht sich ein Druck in der Hauptleitung 2, welcher zur Vorderradbremse 121 übertragen wird. Das erste Ventil 11 ist in der geöffneten Stellung und das zweite Ventil 12 in der geschlossenen Stellung, wie in Figur 2 gezeigt. Ein Volumen der Speicherkammer 4 ist sehr klein oder Null. Wenn ein an der Vorderradbremse 121 angeordneter Sensor 18 der Vorderradbremse 121 ein Blockieren des Vorderrades erfasst, öffnet die Steuereinheit 101 das zweite Ventil 12 und schließt das erste Ventil 11, um Druck durch Volumenerweiterung in der Speicherkammer 4 an der Vorderradbremse 121 abzubauen. Dadurch wird ein Blockieren des Vorderrads wieder gelöst.

Um das Antiblockier-System wieder in den Ausgangszustand zu versetzen, betätigt die Steuereinheit 101 den Aktor 8, so dass der Kolben 5 das sich nun in der Speicherkammer 4 befindliche Hydraulikfluid aus der Speicherkammer 4 in die Nebenleitung 3 und von dort in Richtung zur Vorderradbremse 121 herausdrückt. Dabei ist das zweite Ventil 12 geöffnet und das erste Ventil 11 geschlossen. Somit kann wieder ein Bremsdruck an der Vorderradbremse 121 aufgebaut werden. Wenn ein weiteres Blockieren des Vorderrads erfasst wird, wird der Vorgang wiederholt. Falls keine Bremsung mehr vorliegt, kann auch das erste Ventil 11 geöffnet werden, so dass sich das Hydraulikfluid wieder zurück in Richtung zum Bremshebel 16 bzw. Reservoir 17 gedrückt wird und ein entsprechender Druckabbau erfolgt.

Somit muss beim ersten Ausführungsbeispiel nur der Kolben 5 durch den ansteuerbaren Aktuator 8 betätigt werden. Das erste Ventil 11 und das zweite Ventil 12 können als einfache Schaltventile ausgelegt sein. Dadurch kann ein besonders kostengünstiger und kompakter Druckmodulator bereitgestellt werden. Ein weiterer besonderer Vorteil dieses Ausführungsbeispiels liegt darin, dass der Kolben 5 vom Hydraulikfluid umgeben ist, so dass eine hydraulische Kraft nur von einer effektiven Kolbenfläche abhängt, welche einem Querschnitt der stiftartigen Verlängerung 52 entspricht. Daher weist der Kolben 5, wie aus Figur 3 ersichtlich ist, an der Druckseite eine zentrale Druckfläche 56 auf, deren Durchmesser dem Querschnitt der stiftartigen Verlängerung 52 entspricht.

Dies ermöglicht insbesondere eine geometrische Form des Kolbens 5 frei zu definieren, um die magnetischen Kräfte zu optimieren, ohne dass dabei eine hydraulische Kraftveränderung auftritt. In diesem Ausführungsbeispiel ist die Druckseite des Kolbens konisch ausgebildet.

Um eine hohe Systemstabilität des Druckmodulators sicherzustellen, ist der Aktor 8 derart auszulegen, dass ein Druck derart geregelt werden kann, dass ein Kraftverlauf des Magnetankers über den Hub des Kolbens 5 flacher ist als ein Verlauf der hydraulischen Kräfte über den Hub. Dies erfordert eine hohe Fertigungsgenauigkeit und kleine Toleranzen. Alternativ ist es auch möglich, dass der Aktor 8 nicht stabil ausgelegt wird, d.h., die Auslegung erlaubt größere Toleranzen, wobei dann als Alternative das zweite Ventil 12 als kontinuierlich regelbares Ventil vorgesehen sein muss. Die Regelung des zweiten Ventils 12 kann dabei, falls dieses als Schaltventil ausgelegt ist, auch durch Regelung der Öffnungs- und Schließzeiten erfolgen oder alternativ durch eine genaue Drosselung in einem Bereich zwischen 0% bis 100% Durchlassfähigkeit des zweiten Ventils.

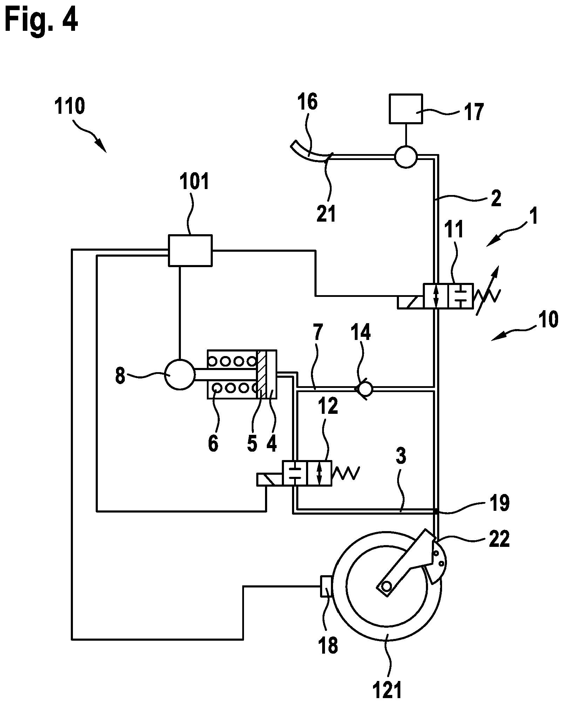

Figur 4 zeigt einen Druckmodulator 1 eines Antiblockier-Systems gemäß einem zweiten Ausführungsbeispiel. Das zweite Ausführungsbeispiel entspricht im Wesentlichen dem ersten Ausführungsbeispiel, wobei zusätzlich noch eine Rückleitung 7 mit einem in der Rückleitung 7 angeordneten Rückschlagventil 14 vorgesehen ist. Wie aus Figur 4 ersichtlich ist, verbindet die Rückleitung 7 die Nebenleitung 3 mit der Hauptleitung 2. Die Rückleitung 7 zweigt dabei von der Nebenleitung 3 in einem Bereich zwischen dem zweiten Ventil 12 und der Speicherkammer 4 ab. Die Rückleitung 7 mündet dabei in die Hauptleitung 2 in einem Bereich zwischen dem ersten Ventil 11 und dem zweiten Anschluss 22.

Das Rückschlagventil 14 ist in der Rückleitung 7 dabei derart angeordnet, dass das Rückschlagventil 14 in Richtung zur Hauptleitung 2 öffnet. Das zweite Ausführungsbeispiel hat insbesondere den Vorteil, dass ein Leistungsbedarf des Druckmodulators signifikant reduziert werden kann. Um einen Druckabbau in der Speicherkammer 4 zu realisieren, muss das zweite Ventil 12 nicht betätigt werden, sondern der Druckabbau erfolgt über die Rückleitung 7 und das durch den hohen Druck geöffnete Rückschlagventil 14 zur Hauptleitung 2. Hier ist vorzugsweise der Aktor 8 als regelbarer Aktor realisiert, um einen gezielten Druckaufbau in der Hauptleitung 2 in Richtung zur Vorderradbremse 121 zu ermöglichen. Das zweite Ventil 12 ist ein Schaltventil, welches im stromlosen Zustand geschlossen ist. Ansonsten entspricht dieses Ausführungsbeispiel dem ersten Ausführungsbeispiel, so dass auf die dort gegebene Beschreibung verwiesen werden kann.

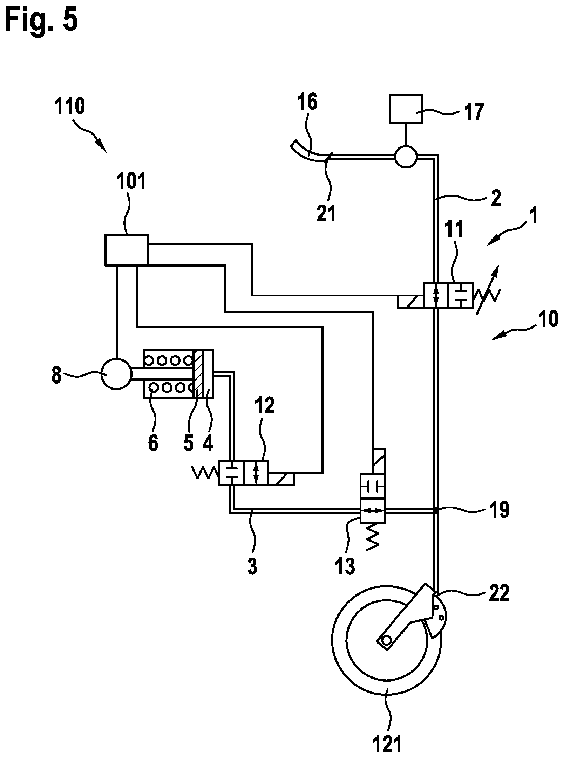

Figur 5 zeigt einen Druckmodulator 1 gemäß der Erfindung. Das dritte Ausführungsbeispiel entspricht im Wesentlichen dem ersten Ausführungsbeispiel, wobei beim dritten Ausführungsbeispiel zusätzlich in der Nebenleitung 3 noch ein drittes Ventil 13 angeordnet ist. Somit umfasst die Ventilanordnung 10 insgesamt drei Ventile. Wie in Figur 5 gezeigt, ist das dritte Ventil 13 in der Nebenleitung 3 zwischen dem zweiten Ventil 12 und einem Abzweigepunkt 19 der Nebenleitung 3 von der Hauptleitung 2 angeordnet. Auch dieses Ausführungsbeispiel kann sehr kostengünstig realisiert werden und weist eine deutlich reduzierte Leistungsaufnahme auf. Hierbei kann der Aktor 8 als nicht regelbarer Aktor ausgebildet sein, was eine deutliche Kostenreduktion ermöglicht. Ferner ist auch das zweite Ventil 12 nur als nicht regelbares Schaltventil ausgebildet. Eine Druckregelung bei einem Entleeren der Speicherkammer 4 erfolgt beim dritten Ausführungsbeispiel ausschließlich über das kontinuierlich regelbare dritte Ventil 13. Im stromlosen Zustand des zweiten und dritten Ventils, z.B. bei einer normalen Bremsung ohne ABS-Eingriff, ist das zweite Ventil 12 geschlossen und das dritte Ventil 13 geöffnet. Bei einem Antiblockier-Eingriff wird dann das zweite Ventil 12 geöffnet und das regelbare dritte Ventil 13 führt den Antiblockier-Regeleingriff aus.

Ein weiteres Ausführungsbeispiel betrifft ein Verfahren zur Ansteuerung des Aktors 8 in der Speicherkammer 4. Hierbei wird durch das Verfahren das Blockieren des Vorderrads erkannt, beispielsweise, indem die Sensorgrößen eines Sensors 18 am Vorderrad ausgewertet werden. Wird dabei das Blockieren des Vorderrads erkannt, wird das erste und/oder zweite Ventil (11, 12) derart ansteuert, dass der Druck der Bremsflüssigkeit in der Vorderradbremse (121) abgebaut wird. Hierzu kann das Verfahren beispielsweise den Aktor 8 der Speicherkammer 4 derart angesteuert werden, dass eine Volumenerweiterung in der Speicherkammer 4 bewirkt wird. Diese Volumenerweiterung zieht dabei Hydraulikflüssigkeit aus der Nebenleitung 3 und somit aus der Vorderradbremse 121 ab und erniedrigt dort den Hydraulikdruck, so dass die Radbremse nicht mehr blockiert.

Zum Versetzen des Systems beziehungsweise des Druckmodulators in den Ausgangszustand kann das Verfahren den Aktor 8 derart ansteuern, dass der Kolben 5 den in der Speicherkammer 4 befindliche Hydraulikflüssigkeit aus der Speicherkammer 4 in die Nebenleitung 8 drückt. Durch eine geeignete Steuerung des ersten und zweiten Ventils 11, 12 kann somit Bremsdruck an der Radbremse aufgebaut werden oder Hydraulikflüssigkeit zurück in das Reservoir 17 gebracht werden.

## Patentansprüche

1. Druckmodulator eines Antiblockier-Systems eines Zweirads, umfassend:
- eine Hauptleitung (2) mit einem ersten Anschluss (21) und einem zweiten Anschluss (22) für eine Radbremse (121, 131),
- eine Nebenleitung (3), welche von der Hauptleitung (2) abzweigt,
- eine Ventilanordnung (10) mit einem ersten Ventil (11) und einem zweiten Ventil (12),
- wobei das erste Ventil (11) in der Hauptleitung (2) angeordnet ist und das zweite Ventil (12) in der Nebenleitung (3) angeordnet ist, und
- eine Speicherkammer (4) mit einem in der Speicherkammer (4) angeordneten Kolben (5) und einem Rückstellelement (6) für den Kolben,
- wobei die Nebenleitung (3) zur Speicherkammer (4) führt,
- wobei die Nebenleitung (3) von der Hauptleitung (2) in einem Bereich zwischen dem ersten Ventil (11) und dem zweiten Anschluss (22) abzweigt, und
- **dadurch gekennzeichnet, dass** der Druckmodulator ferner ein drittes Ventil (13) umfasst, welches in der Nebenleitung (3) zwischen dem zweiten Ventil (12) und dem Abzweigepunkt (19) der Nebenleitung von der Hauptleitung angeordnet ist, wobei das dritte Ventil (13) ein kontinuierlich regelbares Ventil ist.

2. Druckmodulator nach Anspruch 1, ferner umfassend einen Aktor (8) zur Bewegung des Kolbens (5).

3. Druckmodulator nach einem der vorhergehenden Ansprüche, wobei das zweite Ventil (12) ein kontinuierlich regelbares Ventil ist und das erste Ventil (11) ein 2/2-Wegeventil ist.

4. Druckmodulator nach einem der vorhergehenden Ansprüche, ferner umfassend eine Rückleitung (7) mit einem in der Rückleitung angeordneten Rückschlagventil (14), wobei die Rückleitung (7) die Nebenleitung (3) mit der Hauptleitung (3) verbindet, wobei die Rückleitung (7) von der Nebenleitung (3) in einem Bereich zwischen der Speicherkammer (4) und dem zweiten Ventil (12) abzweigt und in einen Bereich der Hauptleitung zwischen dem ersten Ventil (11) und einem Abzweigepunkt (19) der Nebenleitung von der Hauptleitung mündet, wobei das Rückschlagventil in Richtung zur Hauptleitung öffnet.

5. Druckmodulator nach Anspruch 1 oder 4, wobei das zweite Ventil (12) ein 2/2-Wegeventil ist.

6. Druckmodulator nach einem der Ansprüche 4 oder 5, wobei das erste Ventil (11) ein 2/2-Wegeventil ist.

7. Druckmodulator nach einem der vorhergehenden Ansprüche, wobei der Aktor (8) ein Magnetaktor ist, insbesondere ein regelbarer Magnetaktor.

8. Druckmodulator nach einem der vorhergehenden Ansprüche, wobei der Kolben (5) eine zur Speicherkammer (4) gerichtete Druckseite (50) und eine Rückseite (51) aufweist, wobei an der Rückseite (51) eine stiftartige Verlängerung (52) angeordnet ist, welche von einer ringförmigen Dichtung (53) umgeben ist und/oder wobei die Druckseite des Kolbens sich verjüngend, insbesondere sich konisch verjüngend, ausgebildet ist und/oder wobei die Druckseite des Kolbens eine Druckfläche (56) aufweist, deren Fläche einer Querschnittsfläche der stiftartigen Verlängerung (52) entspricht.

9. Druckmodulator nach einem der vorhergehenden Ansprüche, wobei der Kolben (5) wenigstens eine Durchgangsöffnung (54) aufweist.

10. Antiblockier-System eines Zweirads, insbesondere eines Fahrrads, umfassend einen Druckmodulator nach einem der vorhergehenden Ansprüche.

11. Zweirad, insbesondere Fahrrad oder elektrisch betreibbares Fahrrad, umfassend ein Antiblockier-System nach Anspruch 10.

## Claims

1. Pressure modulator of an anti-blocking system of a two-wheeler, comprising:
- a main line (2) having a first connector (21) and a second connector (22) for a wheel brake (121, 131);
- a branch line (3) which branches off from the main line (2);
- a valve assembly (10) having a first valve (11) and second valve (12);
- wherein the first valve (11) is disposed in the main line (2), and the second valve (12) is disposed in the branch line (3); and
- a storage chamber (4), having a piston (5) disposed in the storage chamber (4), and a restoring element (6) for the piston;
- wherein the branch line (3) leads to the storage chamber (4);
- wherein the branch line (3) in a region between the first valve (11) and the second connector (22) branches off from the main line (2); and
**characterized in that** the pressure modulator furthermore comprises a third valve (13) which in the branch line (3) is disposed between the second valve (12) and the bifurcation point (19) of the branch line from the main line; wherein the third valve (13) is a continuously feedback-controllable valve.

2. Pressure modulator according to Claim 1, furthermore comprising an actuator (8) for moving the piston (5) .

3. Pressure modulator according to one of the preceding claims, wherein the second valve (12) is a continuously feedback-controllable valve, and the first valve (11) is a 2/2-way valve.

4. Pressure modulator according to one of the preceding claims, furthermore comprising a return line (7) having a check valve (14) disposed in the return line; wherein the return line (7) connects the branch line (3) to the main line (3); wherein the return line (7) in a region between the storage chamber (4) and the second valve (12) branches off from the branch line (3) and opens into a region of the main line between the first valve (11) and a bifurcation point (19) of the branch line from the main line; wherein the check valve opens in the direction towards the main line.

5. Pressure modulator according to Claim 1 or 4, wherein the second valve (12) is a 2/2-way valve.

6. Pressure modulator according to one of Claims 4 or 5, wherein the first valve (11) is a 2/2-way valve.

7. Pressure modulator according to one of the preceding claims, wherein the actuator (8) is a solenoid actuator, in particular a feedback-controllable solenoid actuator.

8. Pressure modulator according to one of the preceding claims, wherein the piston (5) has a pressure side (50), directed towards the storage chamber (4), and a rear side (51), wherein a pin-type extension (52) which is surrounded by an annular seal (53) is disposed on the rear side (51), and/or wherein the pressure side of the piston is configured so as to taper, in particular taper conically, and/or wherein the pressure side of the piston has a pressure surface (56) of which the area corresponds to the cross-sectional area of the pin-type extension (52).

9. Pressure modulator according to one of the preceding claims, wherein the piston (5) has at least one through opening (54).

10. Anti-blocking system of a two-wheeler, in particular of a bicycle, comprising a pressure modulator according to one of the preceding claims.

11. Two-wheeler, in particular bicycle or electrically operable bicycle, comprising an anti-blocking system according to Claim 10.

## Revendications

1. Modulateur de pression d'un système antiblocage d'un deux-roues, comprenant :
- une conduite principale (2) avec un premier raccord (21) et un deuxième raccord (22) pour un frein de roue (121, 131),
- une conduite secondaire (3) qui est dérivée à partir de la conduite principale (2),
- un agencement de soupapes (10) avec une première soupape (11) et une deuxième soupape (12),
- la première soupape (11) étant agencée dans la conduite principale (2) et la deuxième soupape (12) étant agencée dans la conduite secondaire (3), et
- une chambre d'accumulation (4) avec un piston (5) agencé dans la chambre d'accumulation (4) et un élément de rappel (6) pour le piston,
- la conduite secondaire (3) menant à la chambre d'accumulation (4),
- la conduite secondaire (3) étant dérivée à partir de la conduite principale (2) dans une zone entre la première soupape (11) et le deuxième raccord (22), et
- **caractérisé en ce que** le modulateur de pression comprend en outre une troisième soupape (13) qui est agencée dans la conduite secondaire (3) entre la deuxième soupape (12) et le point de dérivation (19) de la conduite secondaire à partir de la conduite principale, la troisième soupape (13) étant une soupape régulable en continu.

2. Modulateur de pression selon la revendication 1, comprenant en outre un actionneur (8) pour déplacer le piston (5).

3. Modulateur de pression selon l'une quelconque des revendications précédentes, dans lequel la deuxième soupape (12) est une soupape régulable en continu et la première soupape (11) est une soupape à 2/2 voies.

4. Modulateur de pression selon l'une quelconque des revendications précédentes, comprenant en outre une conduite de retour (7) avec une soupape anti-retour (14) agencée dans la conduite de retour, la conduite de retour (7) reliant la conduite secondaire (3) à la conduite principale (3), la conduite de retour (7) étant dérivée à partir de la conduite secondaire (3) dans une zone entre la chambre d'accumulation (4) et la deuxième soupape (12) et débouchant dans une zone de la conduite principale entre la première soupape (11) et un point de dérivation (19) de la conduite secondaire à partir de la conduite principale, la soupape anti-retour s'ouvrant en direction de la conduite principale.

5. Modulateur de pression selon la revendication 1 ou 4, dans lequel la deuxième soupape (12) est une soupape à 2/2 voies.

6. Modulateur de pression selon l'une quelconque des revendications 4 ou 5, dans lequel la première soupape (11) est une soupape à 2/2 voies.

7. Modulateur de pression selon l'une quelconque des revendications précédentes, dans lequel l'actionneur (8) est un actionneur magnétique, notamment un actionneur magnétique régulable.

8. Modulateur de pression selon l'une quelconque des revendications précédentes, dans lequel le piston (5) présente un côté pression (50) orienté vers la chambre d'accumulation (4) et un côté arrière (51), un prolongement (52) en forme de tige étant agencé sur le côté arrière (51), qui est entouré d'un joint annulaire (53), et/ou le côté pression du piston étant réalisé sous forme se rétrécissant, notamment se rétrécissant coniquement, et/ou le côté pression du piston présentant une surface de pression (56) dont la surface correspond à une surface de section transversale du prolongement en forme de tige (52).

9. Modulateur de pression selon l'une quelconque des revendications précédentes, dans lequel le piston (5) présente au moins une ouverture de passage (54).

10. Système antiblocage d'un deux-roues, notamment d'une bicyclette, comprenant un modulateur de pression selon l'une quelconque des revendications précédentes.

11. Deux-roues, notamment bicyclette ou bicyclette à propulsion électrique, comprenant un système antiblocage selon la revendication 10.
